# EUROPÄISCHE PATENTSCHRIFT

(11) **EP 1 829 767 B1**
(45) Veröffentlichungstag und Bekanntmachung des Hinweises auf die Patenterteilung: **19.08.2009**
(21) Anmeldenummer: 07003992.0
(22) Anmeldetag: 27.02.2007
(51) Int. Cl.: B62D 21/11, B62D 21/15

(54) **Hilfsrahmen zur Befestigung an einer Karosserie eines Kraftwagens**
Subframe for attachment to a motor vehicle body
Cadre auxiliaire pour monter à la carrosserie d'un véhicule automobile

(30) Priorität: 01.03.2006 DE 102006009289
(43) Veröffentlichungstag der Anmeldung: 05.09.2007
(73) Patentinhaber: AUDI AG, 85045 Ingolstadt (DE)
(72) Erfinder: Kramer, Tobias, 85134 Stammham (DE); Hudler, Roland, 85077 Manching (DE); Wenger, Josef, 86529 Schrobenhausen (DE)
(74) Vertreter: Patzelt, Heike Anna Maria

(56) Entgegenhaltungen:
- EP-A- 0 941 912
- DE-A1- 19 922 800
- JP-A- 2005 289 126
- US-A1- 2003 075 951

## Beschreibung

Die Erfindung betrifft einen Hilfsrahmen zur Befestigung an einer Karosserie eines Kraftwagens der im Oberbegriff des Patentanspruchs 1 angegebenen Art.

Derartige Hilfsrahmen werden im Kraftwagenbau allgemein als Achsträger, Achsschemel oder Integralträger bezeichnet und sowohl im Bereich der Vorbaustruktur wie auch im Bereich der Heckstruktur von Kraftfahrzeugen eingesetzt. Neben der Aussteifung der Vorbau- oder Heckstruktur dienen derartige Hilfsrahmen auch zur Anbindung und Abstützung von Radführungsgliedern bzw. Achslenkern, Darüber hinaus werden solche Hilfsrahmen oft mit Aufnahmen für das Lenkgetriebe, für Stabilisatoren, für das Antriebsaggregat, für ein Differenzialgetriebe oder dergleichen versehen.

Ein solcher Hilfsrahmen ist beispielsweise aus der EP 0 941 912 B1 als bekannt zu entnehmen, bei dem zwei in Fahrzeuglängsrichtung verlaufende und voneinander beabstandete Längsträgerelemente in Blechschalenbauweise vorgesehen sind, weiche an ihren dem Kraftwagenbug zugewandten vorderen Enden über ein in Fahrzeugquerrichtung verlaufendes Querträgerelement zu einem U-förmigen Rahmen verbunden sind. Um beispielsweise die insbesondere im Fahrbetrieb über die Radführungsglieder bzw. Achslenker in den Hilfsrahmen eingeleiteten dynamischen Kräfte besser aufnehmen oder die Crashstabilität des Hilfsrahmens verbessern zu können, ist der Verbund aus den beiden seitlichen Längsträgerelementen und dem Querträgerelement durch ein flächiges Versteifungselement in Form eines Versteifungsbleches ausgesteift. Hierzu ist das Versteifungselement über jeweils drei Schrauben an zugeordneten Konsolen des jeweiligen Längsträgerelements befestigt.

Als nachteilig bei dem bekannten Hilfsrahmen ist der Umstand anzusehen, dass dieser nur relativ schwer an das Deformationsverhalten der Vorbauoder Heckstruktur des Kraftwagens angepasst werden kann. Darüber hinaus sind die Befestigungsstellen zur Festlegung des Hilfsrahmens an der Kraftwagenkarosserie sowie Aufnahmen zur Halterung der Radführungsglieder bzw. Achslenker auf relativ umständliche Weise an dem Hilfsrahmen angeordnet.

Aufgabe der vorliegenden Erfindung ist es daher, einen Hilfsrahmen der eingangs genannten Art zu schaffen, der einfacher aufgebaut, besser an das Grashverhalten der zugehörigen Vorbau- oder Heckstruktur anzupassen und darüber hinaus besonders steif auszubilden ist.

Diese Aufgabe wird erfindungsgemäße durch einen Hilfsrahmen mit den Merkmalen des Patentanspruchs 1 gelöst. Vorteilhafte Ausgestaltungen mit zweckmäßigen und nicht-trivialen Weiterbildungen der Erfindung sind in den übrigen Patentansprüchen beschrieben.

Bei dem Hilfsrahmen nach der Erfindung umfassen die Längsträgerelemente jeweils ein zwischen einem vorderen und hinteren Metallgussteil angeordnetes, als energieabsorbierendes Deformationsteil ausgebildetes Längsträgerteil, wobei das Versteifungselement zumindest einerseits mit dem Querträgerelement und andererseits mit den hinteren Metallgussteilen verbunden ist. Durch die Ausgestaltung der Längsträgerelemente mit jeweils einem vorderen und hinteren Metallgussteil ist es dabei möglich, Befestigungsstellen zur Festlegung des Hilfsrahmens an der Kraftvuagenkarosserie oder Aufnahmen zur Halterung von Fahrwerksgliedem bzw. Achslenkern auf einfache Weise direkt an dem jeweiligen Iv1etaligussteil anzuformen. Im Unterschied zu den aus dem Stand der Technik bekannten Längsträgerelementen, bei denen die Befestigungsstellen zur Festlegung des Hilfsrahmens an der Kraftwagenkarosserie bzw. die Aufnahmen zur Halterung von Fahrwerksgliedern oder dergleichen durch entsprechend aufwändige Nacharbeiten bereitgestellt werden müssen, ist es erfindungsgemäß möglich, die Befestigungsstellen und die Aufnahmen an den vorderen und hinteren Metallgussteilen anzuformen und nach dem Gießverfahren beispielsweise lediglich spanabhebend zu bearbeiten.

Darüber hinaus ermöglicht die erfindungsgemäße Ausgestaltung der Längsträgerelemente mit dem zwischen den beiden jeweiligen Ntetailgussteilen angeordneten energieabsorbierenden Längsträgerteil eine genaue Abstimmung des Hilfsrahmens auf das Deformationsvermögen bzw. die Deformationseigenschaft der zugehörigen Vorbau- oder Heckstruktur. Insbesondere ist es dabei möglich, das jeweils vordere und hintere Metallgussteil auf äußerst einfache und stabile Weise beispielsweise an einem zugehörigen Längsträger der Kraftwagenkarosserie zu befestigen und darüber hinaus das dazwischen angeordnete Längsträgerteil in Form und Material so auszubilden, dass sich ein optimales und auf die Vorbau- bzw. Heckstruktur abgestimmtes Crashverhalten des Hilfsrahmens ergibt.

Schließlich ermöglicht das erfindungsgemäß vorgesehene Versteifungselement eine Aussteifung des Querträgerelements sowie eine äußerst stabile Verbindung der hinteren Metallgussteile mit dem Querträgerelement, so dass im Falle einer crashbedingten Beaufschlagung des Hilfsrahmens die auf das Querträgerelement einwirkenden Unfallkräfte sehr gut abgefangen werden können.

In weiterer Ausgestaltung der Erfindung hat es sich als zudem vorteilhaft gezeigt, das Versteifungselement als flächige Versteifungsplatte auszubilden, welche sich zwischen den vorderen und hinteren Metallgussteilen erstreckt. Eine derartige flächige Versteifungsplatte ist sehr leicht und kostengünstig herstellbar und ermöglicht eine hohe Gestaltungsfreiheit bei der Wahl der Befestigungsstellen der Versteifungsplatte an den Längsträgerelementen bzw. an dem wenigsten einen Querträgerelement.

Alternativ zu der Ausgestaltung als flächige Versteifungsplatte hat sich ein als Kreuzstrebe ausgebildetes Versteifungselement als besonders vorteilhaft gezeigt, dessen Streben sich zwischen dem jeweils vorderen und dem seitlich gegenüberliegenden hinteren Metallgussteil erstrecken. Eine derartige Kreuzstrebe zeichnet sich insbesondere dadurch aus, dass diese besonders gewichtsgünstig und den Hilfsrahmen besonders gut versteifend ausgebildet werden kann.

In weiterer Ausgestaltung der Erfindung weisen die vorderen Metallgussteile jeweils eine Aufnahme zur Befestigung des Querträgerelements auf, wobei das Versteifungselement im Bereich der Aufnahmen mit dem Querträgerelement verbunden ist. Mit anderen Worten hat es sich als vorteilhaft gezeigt, das Versteifungselement in denjenigen Bereichen des Querträgerelements zu befestigen, in welchen dieses mit dem zugehörigen vorderen Metallgussteil verbunden ist. In einer besonders vorteilhaften Ausgestaltung ist daher die Befestigung des Versteifungselementes in den Überlappungsbereichen der vorderen Metallgussteile mit dem vorderen Querträgerelement vorgesehen.

Eine besonders steife Anbindung des Versteifungselementes an die Längsträgerelemente des Hilfsrahmens lässt sich darüber hinaus realisieren, wenn die vorderen Metallgussteile jeweils eine weitere Aufnahme zur Befestigung des Versteifungselements umfassen. Diese weiteren Aufnahmen sind dabei vorzugsweise - in Fahrzeuglängsrichtung betrachtet - in einem Abstand hinter den Aufnahmen für das Querträgerelement angeordnet. Darüber hinaus lässt sich der Hilfsrahmen weiter dadurch versteifen, dass die beiden Enden der Längsträgerelemente auf der dem vorderen Querträgerelement abgewandten Seite ebenfalls mit einem weiteren Querträgerelement miteinander verbunden sind. Im Ergebnis entsteht hierdurch ein im Wesentlichen rechteckförmiger geschlossener Rahmen, der besonders einfach durch das Versteifungselement zu versteifen ist. Hierzu hat es sich als besonders vorteilhaft erwiesen, auch das hintere Wuerträgeralement fest mit dem Versteifungselement zu verbinden. In einer besonders vorteilhaften Ausgestaltung kann darüber hinaus das hintere Querträgerelement auch einteilig mit dem Versteifungselement ausgebildet werden.

In weiterer Ausgestaltung der Erfindung umfassen die hinteren Metallgussteile jeweils eine Aufnahme zur Befestigung des zugeordneten energieabsorbierenden Deformationsteils, wobei sich ein besonders steifer Verbund unter Einbeziehung der hinteren Metallgussteile realisieren lässt, indem das Versteifungselement im Bereich der Aufnahmen mit den hinteren Metallgussteilen festgelegt ist.

Sind in einer weiter bevorzugten Ausführungsform die vorderen und hinteren Metallgussteile mit Anbindungsstellen für Radführungsglieder des Fahrwerks des Kraftwagens versehen, so ist auf fertigungstechnisch einfache Weise die Anbindung des Fahrwerks an den Hilfsrahmen zu realisieren.

Schließlich hat es sich als vorteilhaft gezeigt, die energieabsorbierenden Deformationsteile als Hohlprofilrohre auszubilden, da diese einen sehr homogenen Kraftverlauf ohne Kraftspitzen im Falle einer unfallbedingten Deformation aufweisen.

Weitere Vorteile, Merkmale und Einzelheiten der Erfindung ergeben sich aus der nachfolgenden Beschreibung eines bevorzugten Ausführungsbeispiels sowie anhand der Zeichnungen, diese zeigen in:

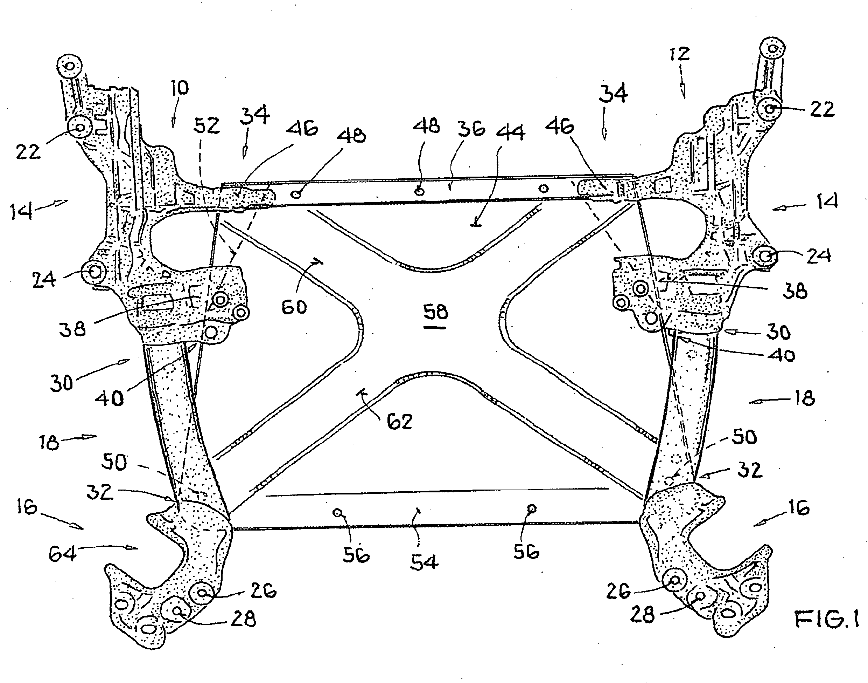

- Fig. 1: eine schematische Unteransicht auf einen Hilfsrahmen zur unterseitigen Befestigung an einer Karosserie eines Kraftwagens, von dem im Wesentlichen zwei in Fahrzeuglängsrichtung verlaufende und voneinander beabstandete Längsträgerelemente über zwei in Fahrzeugquerrichtung verlaufende vordere und hintere Querträgerelemente miteinander verbunden und durch ein Versteifungselement ausgesteift sind, welches als mit ausgezogenen Linien dargestellte flächige Versteifungsplatte oder als mit gestrichelten Linien dargestellte Kreuzstrebe ausgebildet sein kann; und in

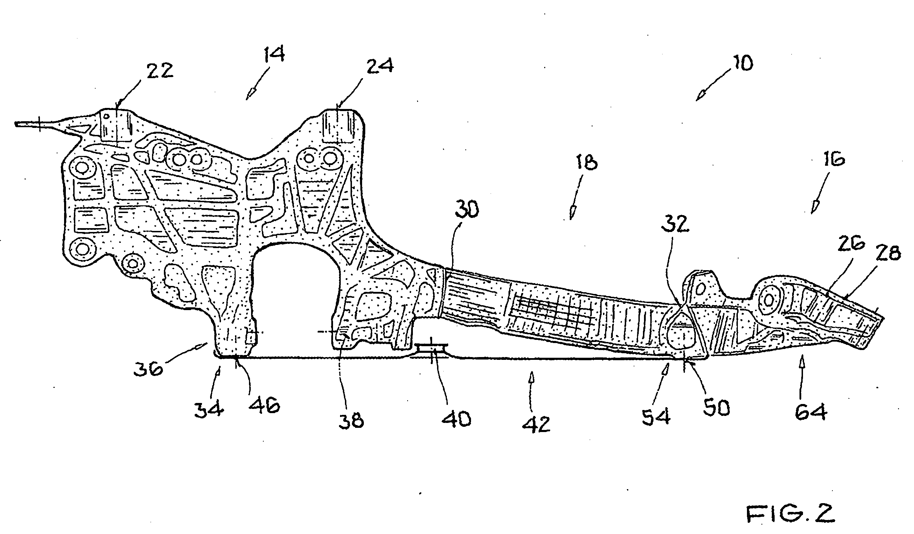

- Fig. 2: eine schematische Seitenansicht auf das linke vordere Längsträgerelement des Hilfsrahmens gemäß Fig. 1, welches ein zwischen einem vorderen und hinteren Metallgussteil angeordnetes energleabsorbierendes Längsträgerteil umfasst, wobei an der Unterseite des Längsträgerelementes das Versteifungselement lösbar festgelegt ist.

In Fig. 1 ist in einer schematischen Unteransicht ein Hilfsrahmen zur Befestigung an einer nicht dargestellten Karosserie eines Kraftwagens, insbesondere eines Personenkraftwagens, dargestellt. Der Hilfsrahmen ist dabei im vorliegenden Ausführungsbeispiel als Achsträger ausgebildet, der an der Unterseite einer Vorbaustruktur der Kraftwagen-Karosserie zu befestigen ist und auf im Weiteren noch näher dargestellt Weise zur Aufnahme bzw. Halterung von Fahrwerksgliedern bzw. Achslenkem dient. Als im Rahmen der Erfindung mit umfasst ist es zu betrachten, dass der Hilfsrahmen selbstverständlich auch am Wagenboden einer Heckstruktur des Kraftwagens befestigt sein kann. Der Hilfsrahmen umfasst im Wesentlichen zwei in Fahrzeuglängsrichtung verlaufende und voneinander beabstandete Längsträgerelemente 10, 12, von denen das linke Längsträgerelement 10 in Fig. 2 In einer schematischen Seitenansicht detaillierter zu erkennen ist. Jedes der Längsträgerelemente 10, 12 umfasst im Wesentlichen ein vorderes Metallgussteil 14 und ein hinteres Metallgussteil 16, weiche über ein als energieabsorbierendes Deformationsteil ausgebildetes Längsträgerteil 18 miteinander verbunden sind. Im vorliegenden Ausführungsbeispiel sind die vorderen und hinteren Metallgussteile 14, 16 aus einer Leichtmetallitegierung, beispielsweise auf Aluminium- oder Magnesiumbasis, hergestellt. Gleichfalls wären natürlich auch andere, im Kraftwagenbau übliche Gusslegierungen denkbar.

Die vorderen Metallgussteile 14 umfassen jeweils zwei Befestigungsstellen 22, 24, über weiche die Längsträgerelemente 10, 12 an ihrer jeweiligen Vorderseite auf nicht weiter dargestellte Weise unterseitig von im Bereich des Wagenbodens der Karosserie des Kraftwagens verlaufenden Längsträgern zu befestigen sind. Weiteren umfassen die hinteren Metallgussteile 16 jeweils zwei Befestigungspunkte 26, 28, über welche die beiden Längsträgerelemente 10, 12 an ihren hinteren Enden an den auf Höhe des Wagenbodens der Kraftwagen-Karosserie verlaufenden Längsträgern zu befestigen sind.

Die Längsträgerteile 18 können beispielsweise als mittels Strangpressen hergestelltes Ein- oder Mehrkammerprofil ausgebildet sein. Das Strangpressprofil kann zwecks weitergehender Querschnittsgestaltung und/oder zwecks Kalibrierung mittels eines Innenhochdruckumformverfahrens (IHU) umgeformt sein. Die Formgebung des Längsträgerteils 18 kann ferner auch ein Biege- und/oder Prägeverfahren umfassen. Es ist klar, dass das Hohlprofil des als energieabsorbierendes Deformationstell ausgebildeten Längsträgertei!s 18 auch auf andere gängige Weise hergestellt sein kann. Wesentlich ist jedoch, dass das jeweilige Längsträgerteil 18 ein hohes Energieabsorptionsvermögen aufweist und Energie ohne die Entstehung von Kraftspitzen abbauen kann.

Das vordere und das hintere Metallgussteil 14, 16 umfasst jeweils eine Aufnahme 30, 32, an welchen das Längsträgerteil 18 befestigt werden kann. Die Aufnahmen 30, 32 der jeweils beiden Metallgussteile 14, 16 können dabei als Steckverbindungseiemente ausgebildet sein, welche am zugehörigen Ende in das Hohlprofil des jeweiligen Längsträgerteils 18 eingesteckt werden. Gleichfalls wäre es auch denkbar, die Aufnahmen 30, 32 außenseitig mit dem jeweiligen Längsträgerteil 18 überlappend auszubilden. Die beiden Metallgussteile 14, 16 können dabei im Bereich der Aufnahmen 30, 32 über eine jeweilige Füg- oder Schraubverbindung festgelegt sein.

Die vorderen Metallgussteile 14 umfassen jeweils eine zum gegenüberliegenden Längsträgerelement 10, 12 bzw. zur Fahrzeugmitte hin abstehende Aufnahme 34, über welche die beiden Längsträgerelemente 10, 12 mit einem Querträgerelement 36 verbunden sind. Die Aufnahmen 34 können dabei wiederum als Steckverbindungsalemente ausgebildet sein, auf weiche das als Hohlprofil ausgebildete Querträgerelement 36 aufsteckbar ist. Dabei kann das Querträgerelement 36 mittels einer Füg- oder Schraubverbindung oder dergleichen mit den beiden vorderen Metallgussteilen 14 verbunden sein. Das vordere Querträgerelement 36 ist vorzugsweise als Strangpressprofil mit einem Hohlquerschnitt ausgebildet. Gleichfalls wären natürlich auch andere Gestaltungen des Querträgerelements 36 denkbar.

Weiterhin umfassen die vorderen Metallgussteile 14 jeweils einen zum gegenüberliegenden Längsträgerelement 10, 12 bzw. zur Fahrzeugmitte hin abragenden Stützarm 38, an dessen Rückseite jeweils eine Aufnahme 40 angeformt ist.

An diesen Aufnahmen 40 ist ein Versteifungselement 42 festlegbar, von dem in Fig. 1 im Wesentlichen zwei Ausführungsformen erkennbar sind. In einer ersten, mit ausgezogenen Linien dargestellten Ausführungsform ist das Versteifungselement 42 als flächige Versteifungsplatte 44 beispielsweise aus einem Metallblech ausgebildet, welche sich zwischen den vorderen und hinteren Metallgussteilen 14, 16 erstreckt. Die Versteifungsplatte 44 ist dabei im Wesentlichen trapezförmig ausgebildet, wobei diese an der dem Kraftwagenbug zugewandten Vorderseite schmaler ausgebildet ist als an der davon abgewandten Rückseite.

Neben der Festlegung an den Aufnahmen 40 des vorderen Metallgussteils 14, ist die Versteifungsplatte 44 an dem vorderen Questrägerelement 36 befestigt. Hierzu sind sowohl Befestigungsstellen 46 im Überlappungsbereich zwischen der jeweils metallgussteilseitigen Aufnahme 40 und dem jeweils zugehörigen Ende des Querträgerelements 36 wie auch Befestigungsstellen 48 in einem mittleren Bereich des Querträgerelements 36, denkbar. Darüber hinaus ist das Versteifungselement 42 bzw. die Versteifungsplatte 44 mit den beiden hinteren Metallgussteilen 16 verbunden. Hierzu ist wiederum im Überlappungsbereich zwischen den metallgussteüseitigen Aufnahmen 32 und dem zugeordneten Ende des Längsträgerieifs 18 eine Befestigungsstelle 50 vorgesehen. Im Bereich der Befestigungsstellen 46, 48, 50 ist die Versteifungsplatte 44 im vorliegenden Ausführungsbeispiel mittels nicht dargestellter Schraubverbindungen lösbar mit den beiden Längsträgerelementen 10, 12 bzw. dem Querträgerelement 36 verschraubt. Gleichfalls wäre es natürlich auch denkbar, das Versteifungselement 42 bzw. die Versteifungsplatte 44 auf andere gängige Weise lösbar oder unlösbar mit den Längsträgerelementen 10, 12 bzw. dem Querträgerelement 36 zu verbinden. Weiterhin wäre es denkbar, dass das Versteifungselement 42 bzw. die Versteifungsplatte 44 lediglich mittelbar mit den jeweils zugehörigen hinteren Metallgussteilen 16 verbunden ist, beispielsweise indem die Befestigungsstellen 50 nicht direkt an den Aufnahmen 32 des jeweiligen hinteren Metallgussteils 16 vorgesehen sind, sondern in deren Nachbarschaft, beispielsweise im Bereich des jeweiligen Längsträgerteils 18. In einer einfachen Ausführungsform kann das Versteifungselement 42 lediglich an den Befestigungsstellen 48 in einem mittleren Bereich des Querträgerelements 36 einerseits und an den hinteren Metallgussteilen 16 andererseits befestigt sein.

Alternativ zur vorbeschriebenen Ausführungsform wäre es darüber hinaus denkbar, dass die Versteifungspiatte 44 - wie mit der gestrichelten Linie 52 angedeutet - ausgehend von Aufnahmen 40 nach vorne hin spitzer zuläuft und im Wesentlichen nur in dem Bereich des Querträgerelements 36 zu liegen kommt, in welchem sich dieses innerhalb der beiden Aufnahmen 34 erstreckt.

In einer weiteren aitemativen Ausführungsform sind die hinteren Metaligussteile 16 über ein hinteres Querträgerelement 54 miteinander verbunden, welches im vorliegenden Ausführungsbeispiel integral mit der Versteifungsplatte 44 gestaltet ist. Gleichfalls wäre es jedoch auch denkbar, das hintere Querträgerelement 54 separat auszubilden bzw. an den hinteren Metallgussteilen zu befestigen. Im zweiten Fall kann die Versteifungsplatte 44 im Bereich der Befestigungsstellen 56 mit dem Querträgerelement 54 verbunden werden. Dabei ist das hintere Querträgerelement im Bereich der Aufnahmen 32 mit den hinteren Metallgussteilen 16 verbunden.

Neben der Ausbildung als Versteifungsplatte 44 ist in Fig. 1 ein Versteifungselement 42 in Form einer Kreuzstrebe 58 gestrichelt angedeutet. Die Kreuzstrebe 58 umfasst im Wesentlichen zwei Streben 60, 62, welche sich zwischen dem jeweils vorderen und dem seitlich gegenüberliegenden hinteren Metallgussteil 14, 16 erstrecken. Die Streben 60, 62 der Kreuzstrebe 58 sind dabei im Bereich der Befestigungsstellen 46, 50 mit den Aufnahmen 34 des vorderen Metallgussteils 14 bzw. den Aufnahmen 32 des hinteren Metallgussteils 16 verschraubt. Das hintere Querträgerelement 54 kann dabei als separates Teil ausgebildet und ebenfalls an den Aufnahmen 32 des hinteren Metallgussteils 16 festgelegt sein.

Die beiden Streben 60, 62 der Kreuzstrebe 58 sind dabei in einem zentralen Bereich verschweißt und entsprechend verstärkt. Die Streben 60, 62 sind vorzugsweise als Hohlprofile, und insbesondere als Strangpressprofile ausgebildet.

Die vorderen und hinteren Metallgussteile 14, 16 umfassen zur Festlegung von Radführungsgliedern bzw. Achslankern des Fahrwerks des Kraftwagens eine Mehrzahl von Anbindungsstellen, von denen beispielhaft eine im Wesentlichen U-förmige Anbiridungsstelle 64 des hinteren Metallgussteils 16 erkennbar ist.

Aus Fig. 2 ist darüber hinaus erkennbar, dass sich das als Versteifungsplatte 44 bzw. Kreuzstrebe 58 ausgebildete Versteifungselement 42 an der Unterseite der Längsträgerelemente 10, 12 bzw. des Querträgerelements 36 erstreckt.

## Patentansprüche

1. Hilfsrahmen zur Befestigung an einer Karosserie eines Kraftwagens mit zwei in Fahrzeuglängsrichtung verlaufenden und voneinander beabstandeten Längsträgerelementen (10, 12), weiche über wenigstens ein in Fahrzeugquerrichtung verlaufendes Querträgerelement (36) miteinander verbunden sind, wobei der Verbund aus den Längsträgerelementen (10, 12) und dem Querträgerelement (36) durch ein Versteifungselement (42) ausgesteift ist,
**dadurch gekennzeichnet, dass**
die Längsträgerelemente (10, 12) jeweils ein zwischen einem vorderen und hinteren Metallgussteil (14, 16) angeordnetes, als energieabsorbierendes Deformationsteil ausgebildetes Längsträgerteil (18) umfassen, wobei das Versteifungselement (42) zumindest einerseits mit dem Querträgerelement (36) und andererseits mit den hinteren Metallgusstellen (16) verbunden ist.

2. Hilfsrahmen nach Anspruch 1,
**dadurch gekennzeichnet, dass**
das Versteifungselement (42) als flächige Versteifungsplatte (44) ausgebildet ist, welche sich zwischen den vorderen und hinteren Metallgussteilen (14, 16) erstreckt.

3. Hilfsrahmen nach Anspruch 1 oder 2,
**dadurch gekennzeichnet, dass**
das Versteifungselement (42) als Kreuzstrebe (58) ausgebildet ist, deren Streben (60, 62) sich zwischen dem jeweils vorderen und dem seitlich gegenüberliegenden hinteren Metallgussteil (14, 16) erstrecken.

4. Hilfsrahmen nach einem der vorhergehenden Ansprüche,
**dadurch gekennzeichnet, dass**
die vorderen Metallgussteile (14) jeweils eine Aufnahme (34) zur Befestigung des Querträgerelements (36) umfassen, wobei das Versteifungselement (42) im Bereich der Aufnahmen (34) mit dem Querträgerelement (36) verbunden ist.

5. Hilfsrahmen nach Anspruch 4,
**dadurch gekennzeichnet, dass**
die vorderen Metallgussteile (14) jeweils eine weitere Aufnahme (40) zur Befestigung des Versteifungselements (42) umfassen.

6. Hilfsrahmen nach einem der vorhergehenden Ansprüche,
**dadurch gekennzeichnet, dass**
die hinteren Metallgussteile (16) der Längsträgerelemente (10, 12) über ein hinteres Querträgerelement (54) miteinander verbunden sind.

7. Hilfsrahmen nach Anspruch 6,
**dadurch gekennzeichnet, dass**
das hintere Querträgerelement (54) fest mit dem Versteifungselement (42) zu verbinden ist.

8. Hilfsrahmen nach Anspruch 6,
**dadurch gekennzeichnet, dass**
das hintere Querträgerelement (54) einteilig mit dem Versteifungselement (42) ausgebildet ist.

9. Hilfsrahmen nach einem der vorhergehenden Ansprüche,
**dadurch gekennzeichnet, dass**
die hinteren Metallgussteile (16) jeweils eine Aufnahme (32) zur Befestigung des zugeordneten energieabsorbierenden Längsträgerteils (18) umfassen, wobei das Versteifungselement (42) im Bereich der Aufnahmen (32) mit den hinteren Metallgussteilen (16) verbunden ist.

10. Hilfsrahmen nach den Ansprüchen 6 und 9,
**dadurch gekennzeichnet, dass**
das hintere Querträgerelement (36) im Bereich der Aufnahmen (34) mit den hinteren Metallgussteilen (16) verbunden ist.

11. Hilfsrahmen nach einem der vorhergehenden Ansprüche,
**dadurch gekennzeichnet, dass**
die vorderen und hinteren Metallgussteile (14, 16) mit Anbindungsstellen (64) für Radführungsglieder des Fahrwerks des Kraftwagens versehen sind.

12. Hilfsrahmen nach einem der vorhergehenden Ansprüche,
**dadurch gekennzeichnet, dass**
die energieabsorbierenden Längsträgerteile (18) als Hohlprofilrohre ausgebildet sind.

## Claims

1. A subframe for attachment to a motor vehicle body, said subframe comprising two longitudinal members (10, 12) which extend at a distance from one another in longitudinal direction of the vehicle and are joined together by at least one cross member (36) extending in transverse direction of the vehicle, the combination of longitudinal members (10, 12) and cross member (36) being braced by a stiffening member (42),
**characterized in that**
the longitudinal members (10, 12) each comprise a longitudinal element (18) disposed between a front and rear metal casting (14, 16) and formed as an energy-absorbing deformation element, and the stiffening member (42) is attached at least to the cross member (36) on the one hand and to the rear metal castings (16) on the other hand.

2. A subframe according to Claim 1,
**characterized in that**
the stiffening member (42) takes the form of a flat strengthening plate (44) which extends between the front and rear metal castings (14, 16).

3. A subframe according to Claim 1 or 2,
**characterized in that**
the stiffening member (42) is formed as a cross strut (58), the struts (60, 62) of which extend in each case between the front metal casting (14) and the rear metal casting (16) lying on the opposite side.

4. A subframe according to one of the preceding claims,
**characterized in that**
the front metal castings (14) each include a mounting (34) for attachment of the cross member (36), and the stiffening member (42) is attached to the cross member (36) in the region of said mountings (34).

5. A subframe according to Claim 4,
**characterized in that**
the front metal castings (14) each include a further mounting (40) for attachment of the stiffening member (42).

6. A subframe according to one of the preceding claims,
**characterized in that**
the rear metal castings (16) of the longitudinal members (10, 12) are joined together by a rear cross member (54).

7. A subframe according to Claim 6,
**characterized in that**
the rear cross member (54) is to be firmly attached to the stiffening member (42).

8. A subframe according to Claim 6,
**characterized in that**
the rear cross member (54) is formed in one piece with the stiffening member (42).

9. A subframe according to one of the preceding claims,
**characterized in that**
the rear metal castings (16) each include a mounting (32) for attachment of the associated energy-absorbing longitudinal element (18), and the stiffening member (42) is attached to the rear metal castings (16) in the region of said mountings (32).

10. A subframe according to Claims 6 and 9,
**characterized in that**
the rear cross member (36) is attached to the rear metal castings (16) in the region of the mountings (34).

11. A subframe according to one of the preceding claims,
**characterized in that**
the front and rear metal castings (14, 16) are provided with attachment points (64) for wheel-control elements of the vehicle chassis.

12. A subframe according to one of the preceding claims,
**characterized in that**
the energy-absorbing longitudinal elements (18) are formed as hollow-profile tubes.

## Revendications

1. Cadre auxiliaire pour la fixation sur une carrosserie d'un véhicule automobile avec deux éléments de longeron (10, 12) espacés l'un de l'autre et s'étendant dans le sens longitudinal de véhicule qui sont reliés l'un à l'autre par au moins un élément de traverse (36) s'étendant dans le sens transversal de véhicule, l'ensemble composé des éléments de longeron (10, 12) et de l'élément de traverse (36) étant renforcé par un élément de renforcement (42),
**caractérisé en ce que**
les éléments de longeron (10, 12) comportent chacun une partie de longeron (18) disposée entre une pièce moulée métallique (14, 16) avant et arrière, réalisée comme une pièce de déformation absorbant l'énergie, l'élément de renforcement (42) étant relié au moins d'une part à l'élément de traverse (36) et , d'autre part, aux pièces moulées métalliques (16) arrière.

2. Cadre auxiliaire selon la revendication 1,
**caractérisé en ce que**
l'élément de renforcement (42) est réalisé comme une plaque de renforcement (44) plane qui s'étend entre les pièces moulées métalliques (14, 16) avant et arrière.

3. Cadre auxiliaire selon la revendication 1 ou 2,
**caractérisé en ce que**
l'élément de renforcement (42) est réalisé comme un croisillon (58), dont les entretoises (60, 62) s'étendent entre les pièces moulées métalliques (14, 16) respectivement avant et arrière opposée latéralement.

4. Cadre auxiliaire selon l'une quelconque des revendications précédentes,
**caractérisé en ce que**
les pièces moulées métalliques (14) avant comportent chacune un logement (34) pour la fixation de l'élément de traverse (36), l'élément de renforcement (42) étant relié dans la zone des logements (34) à l'élément de traverse (36).

5. Cadre auxiliaire selon la revendication 4,
**caractérisé en ce que**
les pièces moulées métalliques (14) avant comportent chacune un autre logement (40) pour la fixation de l'élément de renforcement (42).

6. Cadre auxiliaire selon l'une quelconque des revendications précédentes,
**caractérisé en ce que**
les pièces moulées métalliques (16) arrière des éléments de longeron (10,12) sont reliées les unes aux autres par un élément de traverse (54) arrière.

7. Cadre auxiliaire selon la revendication 6,
**caractérisé en ce que**
l'élément de traverse (54) arrière doit être relié fixement à l'élément de renforcement (42).

8. Cadre auxiliaire selon la revendication 6,
**caractérisé en ce que**
l'élément de traverse (54) arrière est réalisé d'un seul tenant avec l'élément de renforcement (42).

9. Cadre auxiliaire selon l'une quelconque des revendications précédentes,
**caractérisé en ce que**
les pièces moulées métalliques (16) arrière comportent chacune un logement (32) pour la fixation de la partie de longeron (18) associée, absorbant l'énergie, l'élément de renforcement (42) étant relié dans la zone des logements (32) aux pièces moulées métalliques (16) arrière.

10. Cadre auxiliaire selon les revendications 6 et 9,
**caractérisé en ce que**
l'élément de traverse (36) arrière est relié dans la zone des logements (34) aux pièces moulées métalliques (16) arrière.

11. Cadre auxiliaire selon l'une quelconque des revendications précédentes,
**caractérisé en ce que**
les pièces moulées métalliques (14, 16) avant et arrière sont pourvues de points d'attache (64) pour des organes de guidage de roues du châssis du véhicule automobile.

12. Cadre auxiliaire selon l'une quelconque des revendications précédentes,
**caractérisé en ce que**
les parties de longeron (18) absorbant l'énergie sont réalisées comme des tubes profilés creux.
